# EUROPÄISCHE PATENTSCHRIFT

(11) **EP 1 069 442 B1**
(45) Veröffentlichungstag und Bekanntmachung des Hinweises auf die Patenterteilung: **18.01.2006**
(21) Anmeldenummer: 00112829.7
(22) Anmeldetag: 17.06.2000
(51) Int. Cl.: G02B 5/04, G02B 23/02, G02B 23/10

(54) **Prismensystem zur Bildumkehr in einem visuellen Beobachtungsstrahlengang**
Prism system for image reversal in a visual observation path
Systèmes de prismes pour inversion d'image dans un trajet d'observation visuel

(30) Priorität: 15.07.1999 DE 19933172
(43) Veröffentlichungstag der Anmeldung: 17.01.2001
(73) Patentinhaber: Leica Camera AG, 35606 Solms bei Wetzlar (DE); Perger, Andreas, 1180 Wien (AT)
(72) Erfinder: Perger, Andreas, Dr., 1120 Wien (AT)
(74) Vertreter: Stamer, Harald

(56) Entgegenhaltungen:
- WO-A-99/06870
- DE-A- 2 625 081
- DE-A- 3 704 848
- DE-A- 4 135 615
- DE-C- 518 143
- GB-A- 1 603 599
- GB-A- 2 024 558

## Beschreibung

Die Erfindung betrifft ein Prismensystem zur Bildumkehr in einem visuellen Beobachtungsstrahlengang, das aus einem Dachkantprisma mit zur Basisfläche geneigter Dachkante und einer zur Basisfläche schräg gestellten Giebelfläche besteht, an die ein Reflexionsprisma angefügt ist, wobei dieses Reflexionsprisma eine zur Basisfläche des Dachkantprismas parallele Strahlendurchtrittsfläche aufweist.

Ein solches Prismensystem ist aus DE-PS 518 143 bekannt und wird dort als parallelsichtiges Umkehrprismensystem bezeichnet. Es weist nur zwei an Luft grenzende, zueinander parallele Strahlendurchtrittsflächen und sechs Spiegelflächen auf, die so angeordnet sind, daß sämtliche Spiegelungen in einer Ebene erfolgen und sämtlich totalreflektierend sind. Die Abbildungstrahlen treten in die Basisfläche des Dachkantprismas ein. Der Winkel zwischen der Basisfläche des Dachkantprismas und der angekitteten nächsten Reflexionsfläche soll kleiner als 110° sein. Solche Prismensysteme werden üblicherweise in afokale optische Abbildungssysteme, wie z.B. bei Fernrohren, eingesetzt.

In den letzten Jahren sind zunehmend femoptische Instrumente, vor allem Ferngläser, auf den Markt gekommen, die Zusatzfunktionen, wie etwa Laserdistanzmessung oder Neigungs- und Richtungsmessung (Kompaß), aufweisen. Die Meßresultate werden dabei vorzugsweise so angezeigt, daß sie beim Blick in das Okular ablesbar sind. Hierbei gibt es zwei Möglichkeiten, nämlich die Anzeige der Meßresultate am Bildfeldrand außerhalb des eigentlichen Sehfeldes oder aber die Einblendung in das Bildfeld hinein, indem man sie mittels eines in den Strahlengang eingefügten Strahlteilers dem Bild überlagert. Diese Variante ist als die ergonomisch günstigere vorzuziehen, da das Einblenden am Bildfeldrand beim Ablesen zu einem Verdrehen des Auges führt, bei dem sich die Pupille des Auges aus der Austrittspupille des Fernglases zunächst herausbewegt, da der Augendrehpunkt typischerweise mehr als einen Zentimeter hinter der Pupille liegt. Durch Parallelverschieben des Fernglases muß daher die Austrittspupille jeweils neu gesucht werden.

Der Einsatz eines Strahlteilers zur Bildüberlagerung bietet demgegenüber die zusätzliche Möglichkeit, etwa bei Anwendung als kombiniertes Fernglas mit Laserdistanzmesser den Beobachtungsstrahlengang für das Senden oder Empfangen der Laserstrahlung mitzubenutzen. Für die Strahlteiler eignen sich neben metallischen oder dielektrischen Neutralteilern vor allem dichroitische Teiler, da die Anzeigewellenlänge eines Displays meist am roten Rand des sichtbaren Spektrums, ein möglicher Diodenlaser aber vorzugsweise im nahen Infrarot emittiert.

Es sind verschiedene Lösungen bekanntgeworden, wie das Einblenden in das Bildfeld mittels eines Strahlteilers vorgenommen werden kann. Aus DE 41 35 615 A1 ist es bekannt, entweder zwischen Objektiv und Umkehrsystem oder zwischen Umkehrsystem und Okular einen Strahlteiler einzufügen. Verwendet man eine einfache Planplatte mit entsprechender Spiegelschicht als Strahlteiler, so ist mit Bildfehlem (Astigmatismus) zu rechnen. Teilerwürfel mit Spiegelfläche in einer Diagonalfläche hingegen sind teuer und erhöhen den Glasweg. Außerdem führen die zumeist unter 45° zur optischen Achse angeordneten Teilerschichten zu einem Farbstichverlauf über das Bildfeld.

Eine weitere Lösung ist aus DE 37 04 848 C2 bekannt. Dabei wird die Einblendung direkt an einem aus drei Halbwürfelprismen aufgebauten Umkehrprisma vorgenommen, bei dem die Strahleneintrittsachse gegenüber der Strahlenaustrittsachse höhenversetzt ist. Zur Einblendung in den Beobachtungsstrahlengang wird auf eine unter 45° zur Strahlenrichtung stehende Reflexionsfläche des Umkehrprismas ein Strahlteilerbelag aufgebracht und danach ein Halbwürfel aufgekittet. Die Reflexionsfläche wird dabei nach wie vor für das Bild in Reflexion benutzt, während die Einblendung der Anzeige oder einer Laserstrahlung in Transmission erfolgt. Auch diese Lösung hat Nachteile. Einerseits wird die Reflexionsfläche nicht nur unter dem Winkel von 45° beansprucht, sondern aufgrund der endlichen Öffnung sowie des ausgedehnten Bildfeldes z.B. unter einem Winkel von 45 ± 5°. Dies führt insbesondere bei dichroitischen Strahlteilern zu einem Farbstichverlauf sowohl über das Bildfeld als auch über die Pupille. Außerdem nimmt die Reflexion des Strahlteilers am Rand des Winkelbereiches wegen des Brewster-Effektes speziell für höherbrechende Gläser wie BaK4, die heute für Umkehrprismen in Ferngläsern hauptsächlich eingesetzt werden, stark ab, was zu einem Helligkeitsabfall führt.

Aus WO 99/06870 A ist ein Porro-Prismensystem erster Art bekannt, an das ein weiteres Prisma zur Ausblendung eines Bildaufnahmestrahlenganges aus dem Beobachtungsstrahlengang, bzw. zur Einblendung eines Bildwiedergabestrahlenganges in den Beobachtungsstrahlengang angekittet ist. Die zur Reflexion des Beobachtungsstrahlenganges und zur Aus- oder Einblendung der weiteren Strahlengänge dienende Kittfläche ist als Strahlenteiler ausgebildet. Der Beobachtungsstrahlengang ist geradsichtig mit einem Achsenversatz.

Aus DE 26 25 081 A ist ein Dachkantprisma bekannt, an dessen Giebelfläche ein rechtwinkliges Prisma mit seiner Hypothenusenfläche aufgekittet ist. Eine der Kathetenflächen ist parallel zur Basisfläche des Dachkantprismas ausgerichtet. Die Kittfläche ist als Strahlteiler ausgebildet. Der in das Dachkantprisma eintretende Beobachtungsstrahl wird an der Dachkante parallel zur Basisfläche reflektiert und tritt nach Reflexion an der Giebelfläche parallel und entgegengerichtet zum eintretenden Beobachtungsstrahlengang aus der Basisfläche aus. Über die zur Basisfläche parallele Fläche des aufgekitteten Prismas kann dem austretenden Beobachtungsstrahlengang ein weiterer Strahlengang überlagert werden.

Der Erfindung lag daher die Aufgabe zugrunde, bei einem geradsichtigen Prismensystem eine Möglichkeit der Einspiegelung zusätzlicher Strahlengänge in den Beobachtungsstrahlengang zu schaffen, die die Abbildungsqualität des Beobachtungsstrahlenganges nicht beeinflußt und die sich mit geringem Bauteileaufwand realisieren läßt.

Diese Aufgabe wird mit einem Prismensystem der eingangs genannten Art durch die Merkmale des unabhängigen Anspruchs 1 gelöst.

Bei der erfindungsgemäßen Vorrichung ist der Giebelfläche (10) eine strahlenteilende Beschichtung (10') zugeordnet. Diese soll vorzugsweise für den Spektralbereich der Beobachtungsstrahlen transmittierend und für den Spektralbereich der Meßwertanzeige und der Entfernungsmessung reflektierend sein. Es ist jedoch auch möglich, als Strahlenteiler einen dielektrischen oder metallischen Neutralteiler mit einem Reflexionsanteil zwischen 10 und 40% vorzusehen. Eine Optimierung kann auch darin bestehen, den Strahlenteiler als dichroitischen Teiler mit guter Transmission im sichtbaren Spektralbereich und guter Reflexion im infraroten Spektralbereich auszubilden.

Die schräggestellte Giebelfläche des Dachkantprismas soll mit der Basisfläche einen Winkel von 22,5 bis 30° bilden. Als Reflexionsprisma wird vorzugsweise ein Rechteckprisma ausgewählt. In einer Ausführungsform können die einen rechten Winkel bildenden Reflexionsflächen dabei der Giebelfläche gegenüber liegen. Es ist jedoch auch möglich, eine der Reflexionsflächen unter einem Winkel von 90° auf dem zur Basisfläche des Dachkantprismas weisenden Bereich der Giebelfläche auszurichten. Als Strahleneintrittsfläche für das

Beobachtungsstrahlenbündel wird zweckmäßigerweise die Strahlendurchtrittsfläche des Reflexionsprismas gewählt.

Ein wesentlicher Schritt zur Lösung der der Erfindung zugrunde liegenden Aufgabe besteht in der Auswahl des nur aus zwei Glasteilen aufgebauten Umkehrsystems, was zu einer erheblichen Kosteneinsparung führt. Ein weiteres Hauptmerkmal ist, daß die Einspiegelung am Umkehrsystem beibehalten werden konnte, so daß ein separates Strahlenteilerelement entfällt. Für die Einspiegelung wird jetzt jedoch eine Fläche verwendet, die vom eigentlichen Fernrohrstrahlengang in Transmission und nicht in Reflexion beansprucht wird. Die gewählte Neigung der Giebelfläche des Dachkantprismas ergibt einen wesentlich steileren Einfallswinkel, unter dem diese Fläche vom Strahlengang durchsetzt wird, nämlich typischerweise in einem Bereich von 60 bis 67,5° (entsprechend 22,5 bis 30° zum Lot auf diese Fläche). Dies ermöglicht die Konzeption dichroitischer Strahlenteiler mit wesentlich geringerem Farbstichverlauf und gleichmäßig hoher Transmission in einem Winkelbereich von ±5°. Statt eines dichroitischen Strahlenteilers kann auch ein, z.B. metallischer Neutralteiler eingesetzt werden. Da in den meisten Anwendungen das Strahlteilerverhältnis zugunsten des Fernglas-Bildes gewählt wird, ergibt sich zwangsläufig eine wenig absorbierenden Teilerschicht, wobei gleichzeitig die verbleibende Reflexion noch für eine geeignete Einspiegelung der Meßwertanzeige und eine augensichere Auskopplung der Laserstrahlung ausreicht.

Ausführungsbeispiele des erfindungsgemäßen Prismensystems sind in der Zeichnung schematisch dargestellt und werden nachfolgend anhand der Figuren näher beschrieben. Dabei zeigen
- Fig.1a: ein erstes Prismensystem mit Beobachtungsstrahlengang,
- Fig.1b: dasselbe Prismensystem mit Strahlengang zur Anzeigeneinspiegelung,
- Fig.1c: dasselbe Prismensystem mit Strahlengang zur Entfernungsmessung,
- Fig.2a: ein zweites Prismensystem mit Beobachtungsstrahlengang,
- Fig.2b: dasselbe Prismensystem mit Strahlengang zur Anzeigeneinspiegelung,
- Fig.2c: dasselbe Prismensystem mit Strahlengang zur Entfemungsmessung,
- Fig.3: das zweite Prismensystem mit kombinierter Anzeigeneinspiegelung und Laserstrahl-Auskopplung.

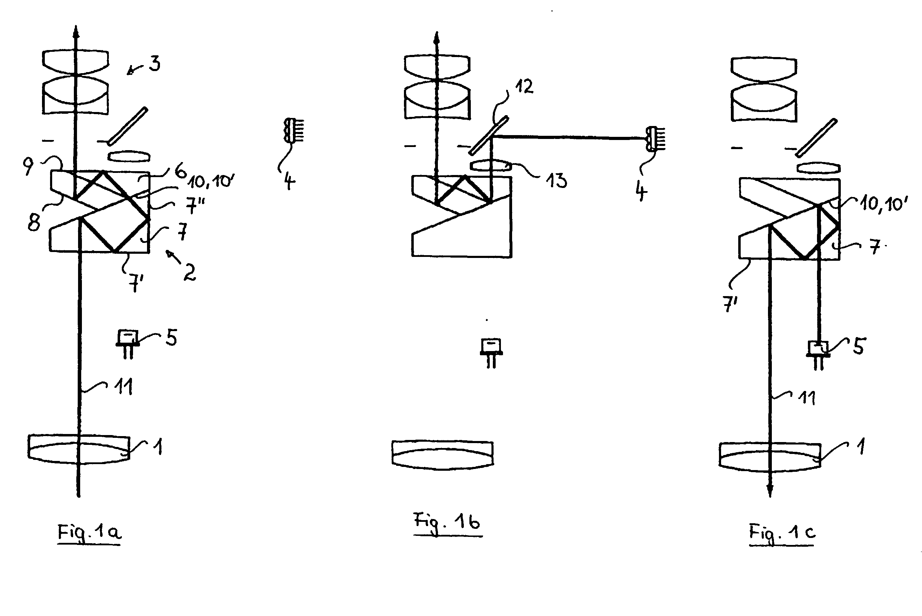

Fig. 1a zeigt ein afokales optisches System, das neben einem Fernrohr mit Objektiv1, Prismensystem 2 und Okular 3 eine einzuspiegelnde Anzeige 4, sowie eine auf den beobachteten Gegenstand strahlende Lichtquelle 5, z.B. eine Laserdieode, als Sendeelement eines Distanzmessers enthält. Kernelement ist das Prismensystem 2, das aus einem Dachkantprisma 6 und einem Reflexionsprisma 7 besteht.

Die Dachkante 8 des Dachkantprismas 6 ist gegenüber der Basisfläche 9 geneigt. Die Giebelfläche 10 ist schräg gestellt. An die Giebelfläche 10 ist das Reflexionsprisma 7 angefügt, wobei dessen rechtwinklig aufeinander stoßende Reflexionsflächen 7', 7" der Giebelfläche 10 gegenüber liegen. Auf die Giebelfläche 10 ist eine strahlenteilende Beschichtung 10' aufgebracht. Die beiden Prismen werden vorzugsweise miteinander verkittet. Der Winkel zwischen Strahlenteiler 10' und optischer Achse 11 beträgt hier 60° und ist so gewählt, daß der Strahleneintritt des Beobachtungsstrahlenganges rechtwinklig zur Glas-/Luft-Fläche 7' am Reflexionsprisma 7 erfolgt. Der Strahlenteiler 10' wird in Transmission benutzt. Die Anordnung zeigt einen sehr geringen Achsversatz zwischen dem in das Prismensystem eintretenden Strahlengang und dem zum Okular 3 austretenden Strahlengang.

Fig. 1 b zeigt die Einspiegelung der Anzeige 4 in den zum Okular 3 führenden Strahlengang. Über einen Umlenkspiegel 12 und eine die Anzeige in eine Zwischenbildebene abbildende Linse 13 werden die Abbildungsstrahlen ebenfalls senkrecht zur Glas-/Luft-Fläche 9 des Dachkantprismas 6 in das Dachkantprisma 6 eingeleitet. Nach Reflexion am Strahlenteiler 10' werden die Abbildungsstrahlen dem Beobachtungsstrahlengang überlagert. Die Einspiegelung erfolgt an derselben Basisfläche 9 wie für den Austritt der Beobachtungsstrahlen zum Okular 3, jedoch in einem davon geometrisch getrennten Flächenbereich.

Fig. 1 c zeigt die Einkopplung der Lichtquelle 5 in den objektivseitigen Strahlengang. Der Strahleintritt erfolgt ebenfalls senkrecht zur Glas-/Luft-Fläche 7' am Reflexionsprisma 7, und zwar wiederum in einem Bereich, der geometrisch von dem Eintrittsbereich der Beobachtungsstrahlen getrennt ist. Der Strahlenteiler 10' arbeitet auch hier in Reflexion. Kommt es auf den Einkoppelwirkungsgrad der Lichtquelle an, wird man die Reflexion für die betreffende (meist im nahen Infrarot liegende) Wellenlänge hoch wählen, was im allgemeinen zu dichroitischen Teilern führt. Dennoch ist es denkbar, auch in diesem Fall mit einem (metallischen) Neutralteiler zu arbeiten und mit einer Reflexion von beispielsweise 20 bis 30% eine ausreichende Einkoppelintensität zu finden, da moderne Laserdioden sehr leistungsfähig sind und die auszusendende Strahlungsleistung durch die Augensicherheitsvorschriften ohnehin begrenzt ist.

Das in Fig. 2a bis c gezeigte Ausführungsbeispiel unterscheidet sich von dem in Fig.1 gezeigten Ausführungsbeispiel lediglich in der Gestaltung des Reflexionsprismas 14, dessen an die Giebelfläche 10 im Bereich der Basisfläche 9 angrenzende erste Reflexionsfläche 14' für die eintretenden Beobachtungsstrahlen senkrecht auf der Giebelfläche 10 steht. Dadurch ergibt sich zwar ein größerer Achsversatz zwischen den objektivseitigen und okularseitigen Strahlengängen, aber dafür ist die Anzahl der Umlenkungen im Prismensystem geringer. Die Auswahl zwischen den beiden Ausführungsbeispielen wird sich nach den vorhandenen Platzverhältnissen in dem aufzubauenden fernoptischen Gerät richten.

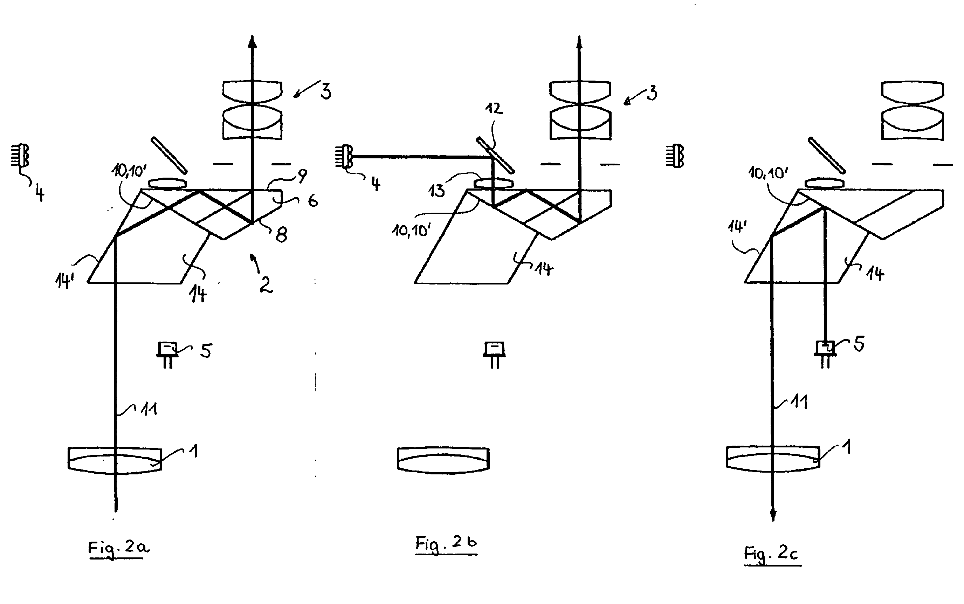

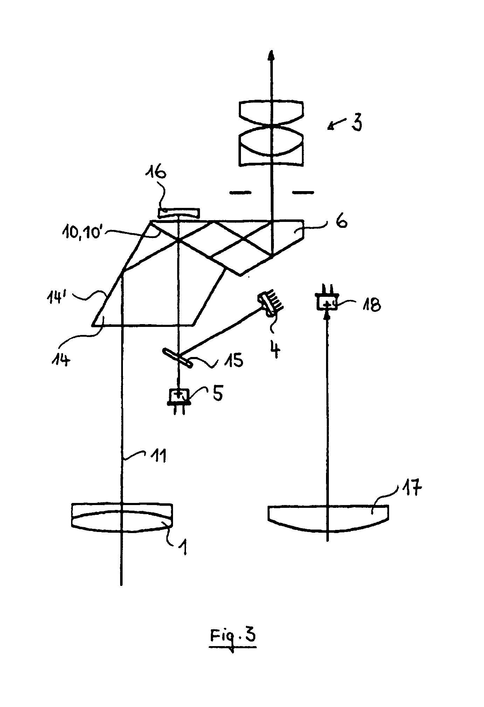

Fig. 3 zeigt eine Variante zu dem in Fig. 2 dargestellten Ausführungsbeispiel, für die ebenfalls die vorhandenen Platzverhältnisse entscheidend sind. Die Anzeige 4 wird über einen vor die Lichtquelle 5 gestellten Teilerspiegel 15 in den Laserstrahlengang eingekoppelt. Der Teilerspiegel läßt die Laserwellenlänge durch, reflektiert jedoch die Anzeigewellenlänge. An dem Strahlenteiler 10' wird die Anzeigewellenlänge zum Teil durchgelassen und über einen zusätzlichen Konkavspiegel 16 erneut auf den Strahlenteiler 10` gerichtet und diesmal nach teilweiser Reflexion dem austretenden Beobachtungsstrahlengang überlagert. Indem die Transmission des Strahlenteilers 10` bei der Anzeigewellenlänge (i.a. rot) mit rund 50% und im mittleren Bereich der sichtbaren Beobachtungsstrahlen mit etwa 70 bis 80% gewählt wird, läßt sich auch hier ein brauchbarer Kompromiß für eine ausreichende Anzeigendarstellung im Bildfeld finden.

Zusätzlich gezeigt ist ein Aufnahmestrahlengang für die vom beobachteten Gegenstand reflektierte Meßstrahlung, aus der ein Distanzmeßsignal gewonnen und über die Anzeige 4 zur Darstellung gebracht wird. Der Aufnahmestrahlengang besteht aus einem Objektiv 17 und einer Empfangsdiode 18 und ist im allgemeinen parallel zum Beobachtungsstrahlengang ausgerichtet.

Selbstverständlich kann zusätzlich zum Aufnahmestrahlengang für die Distanzmessung auch ein separater Sendestrahlengang vorgesehen sein. In diesem Fall entfällt in Fig. 3 die Lichtquelle 5 und die Anzeige 4 kann auch ohne Umweg über den Teilerspiegel 15 in das Prismensystem und weiter in den Beobachtungsstrahlengang eingeleitet werden.

## Patentansprüche

1. Geradsichtiges, bildumkehrendes Prismensystem (2), das aus einem Dachkantprisma (6) mit einer zur Basisfläche (9) geneigten Dachkante (8) und einer zur Basisfläche (9) schräg gestellten Giebelfläche (10) besteht, wobei die Neigung der Dachkante (8) so gewählt ist, daß ein durch die Basisfläche (9) senkrecht eintretender Strahl von der Dachkante (8) auf die Basisfläche (9) reflektiert wird, und an die Giebelfläche (10) ein Reflexionsprisma (7; 14) angefügt ist, wobei dieses Reflexionsprisma (7; 14) mindestens eine Reflexionsfläche (7";14') für den an der Basisfläche (9) reflektierten und durch die Giebelfläche (10) hindurchtretenden Strahl sowie eine zur Basisfläche (9) parallele Fläche (7') zum senkrechten Durchtritt für den Strahl aufweist, **dadurch gekennzeichnet, daß**
- die Neigung der Giebelfläche (10) zur Basisfläche (9) so gewählt ist, daß der an der Basisfläche (9) reflektierte erste Strahl unter einem Winkel im Bereich von 60° bis 67,5° auf die Giebelfläche (10) auftrifft,
- der Giebelfläche (10) eine strahlenteilende Beschichtung (10') zugeordnet ist,
- die Basisfläche (9) des Dachkantprismas (6) und die zu ihr parallele Fläche (7') des Reflexionsprismas (7; 14) jeweils einen von dem Strahlendurchtrittsbereich des ersten Strahls geometrisch getrennten zweiten Strahlendurchtrittsbereich für den senkrechten Durchtritt eines zweiten und/oder dritten Strahls aufweisen, und wobei
- die zweiten Strahlendurchtrittsbereiche der Basisfläche (9) des Dachkantprismas (6) und der dazu parallen Fläche (7') der Reflexionsprismas (7, 14) der Giebelfläche (10) gegenüber liegen derart daß die zweiten und/oder dritten Strahlen an der Giebelfläche mit dem ersten Strahl zur überlagerbar sind.

2. Prismensystem nach Anspruch 1, **dadurch gekennzeichnet, daß** der Strahlenteiler (10') für den Spektralbereich der Beobachtungsstrahlen transmittierend und für den Spektralbereich der Meßwertanzeige und Entfernungsmessung reflektierend ist.

3. Prismensystem nach Anspruch 1, **dadurch gekennzeichnet, daß** der Strahlenteiler (10') als dielektrischer oder metallischer Neutralteiler mit einer Reflexion zwischen 10 und 40% ausgebildet ist.

4. Prismensystem nach Anspruch 1, **dadurch gekennzeichnet, daß** der Strahlenteiler (10') als dichroitischer Teiler mit guter Transmission im sichtbaren Spektralbereich und guter Reflexion im infraroten Spektralbereich ausgebildet ist.

5. Prismensystem nach Anspruch 1, **dadurch gekennzeichnet, daß** die schräggestellte Giebelfläche (10) des Dachkantprismas (6) mit der Basisfläche (9) einen Winkel von 22,5 bis 30° bildet.

6. Prismensystem nach Anspruch 1, **dadurch gekennzeichnet, daß** das Reflexionsprisma (7) ein Rechteckprisma ist.

7. Prismensystem nach Anspruch 6, **dadurch gekennzeichnet, daß** die einen rechten Winkel miteinander bildenden Reflexionsflächen des Rechteckprismas der Giebelfläche (10) gegenüber liegen.

8. Prismensystem nach Anspruch 6, **dadurch gekennzeichnet, daß** eine der Reflexionsflächen des Rechteckprismas unter einem rechten Winkel auf dem zur Basisfläche (9) des Dachkantprismas (6) weisenden Bereich der Giebelfläche (10) steht.

9. Prismensystem nach Anspruch 1, **dadurch gekennzeichnet, daß** die Strahlendurchtrittsfläche des Reflexionsprismas (7) die Eingangsseite des Beobachtungsstrahlenganges bildet.

## Claims

1. Direct-vision, image-inverting prism system (2) which comprises a roof prism (6) with a roof edge (8) inclined with respect to the bottom face (9), and a gable face (10) which is placed at an angle with respect to the bottom face (9), the inclination of the roof edge (8) being selected such that a beam entering perpendicularly through the bottom face (9) is reflected by the roof edge (8) onto the bottom face (9), and a reflecting prism (7; 14) is joined to the gable face (10), this reflecting prism (7; 14) having at least one reflecting face (7''; 14') for the beam reflected at the bottom face (9), and passing through the gable face (10), as well as a face (7') parallel to the bottom face (9) for the perpendicular passage of the beam, **characterized in that**
- the inclination of the gable face (10) to the bottom face (9) is selected such that the first beam reflected at the bottom face (9) impinges on the gable face (10) at an angle in the range of 60° to 67.5°,
- the gable face (10) is assigned a beam-splitting coating (10'),
- the bottom face (9) of the roof prism (6), and the face (7'), parallel thereto, of the reflecting prism (7; 14) in each case have a second beam-pass area, separated geometrically from the beam-pass area of the first beam, for the perpendicular passage of a second and/or third beam, and
- the second beam-pass areas of the bottom face (9) of the roof prism (6) and of the face (7'), parallel thereto, of the reflecting prism (7; 14) being situated opposite the gable face (10) in such a way that the first beam can be superimposed on the second and/or third beams at the gable face.

2. Prism system according to Claim 1, **characterized in that** the beam splitter (10') is transmissive for the spectral range of the observation beams and reflective for the spectral range of the measured-value display and rangefinder measurement.

3. Prism system according to Claim 1, **characterized in that** the beam splitter (10') is formed as a dielectric or metallic neutral-density beam splitter with a reflectance between 10 and 40%.

4. Prism system according to Claim 1, **characterized in that** the beam splitter (10') is formed as a dichroic beam splitter with good transmission in the visible spectral range and good reflection in the infrared spectral range.

5. Prism system according to Claim 1, **characterized in that** the angled gable face (10) of the roof prism (6) forms an angle of 22.5 to 30° with the bottom face (9).

6. Prism system according to Claim 1, **characterized in that** the reflecting prism (7) is a right-angle prism.

7. Prism system according to Claim 6, **characterized in that** the reflecting faces of the right-angle prism, forming a right angle with each other, are located opposite the gable face (10).

8. Prism system according to Claim 6, **characterized in that** one of the reflecting faces of the right-angle prism is at right angles to that area of the gable face (10) which points towards the bottom face (9) of the roof prism (6).

9. Prism system according to Claim 1, **characterized in that** the beam-pass face of the reflecting prism (7) forms the entry side of the observation beam path.

## Revendications

1. Système de prismes (2) à vision directe pour inversion d'image qui se compose d'un prisme triangulaire (6) dont l'arête supérieure (8) est inclinée par rapport à la surface de base (9) et d'une surface frontale (10) en biais par rapport à la surface de base (9), l'inclinaison de l'arête supérieure (8) étant choisie de telle sorte qu'un rayon qui pénètre perpendiculairement à travers la surface de base (9) est reflétée de l'arête supérieure (8) sur la surface de base (9), et un prisme à réflexion (7 ; 14) étant accolé à la surface frontale (10), ce prisme à réflexion (7 ; 14) présentant au moins une surface de réflexion (7'' ; 14') pour le rayon réfléchi sur la surface de base (9) et qui traverse la surface frontale (10) ainsi qu'une surface (7') parallèle à la surface de base (9) destinée à être traversée perpendiculairement par le rayon, **caractérisé en ce que**
- l'inclinaison de la surface frontale (10) par rapport à la surface de base (9) est choisie de telle sorte que le premier rayon qui est réfléchi sur la surface de base (9) est incident sur la surface frontale (10) sous un angle compris dans la plage de 60° à 67,5°,
- un revêtement séparateur de rayons (10') est associé à la surface frontale (10),
- la surface de base (9) du prisme triangulaire (6) et la surface (7') du prisme à réflexion (7 ; 14) qui lui est parallèle présentent respectivement une deuxième zone de traversée de rayon séparée géométriquement de la zone de traversée de rayon du premier rayon pour la traversée perpendiculaire d'un deuxième et/ou troisième rayon, et
- les deuxièmes zones de traversée de rayon de la surface de base (9) du prisme triangulaire (6) et la surface (7') du prisme à réflexion (7 ; 14) qui est parallèle à la surface de base sont à l'opposé de la surface frontale (10) de telle sorte que les deuxièmes et/ou les troisièmes rayons peuvent être superposés au premier rayon au niveau de la surface frontale.

2. Système de prismes selon la revendication 1, **caractérisé en ce que** le séparateur de rayons (10') est transmetteur pour la plage spectrale des rayons d'observation et réfléchissant pour la plage spectrale de l'indicateur de valeur mesurée et de la mesure de distance.

3. Système de prismes selon la revendication 1, **caractérisé en ce que** le séparateur de rayons (10') est réalisé sous la forme d'un séparateur neutre diélectrique ou métallique avec une réflexion comprise entre 10 et 40 %.

4. Système de prismes selon la revendication 1, **caractérisé en ce que** le séparateur de rayons (10') est réalisé sous la forme d'un séparateur dichroïque avec une bonne transmission dans la plage spectrale visible et une bonne réflexion dans la plage spectrale des infrarouges.

5. Système de prismes selon la revendication 1, **caractérisé en ce que** la surface frontale (10) en biais du prisme triangulaire (6) forme un angle de 22,5 à 30° avec la surface de base (9).

6. Système de prismes selon la revendication 1, **caractérisé en ce que** le prisme à réflexion (7) est un prisme rectangulaire.

7. Système de prismes selon la revendication 6, **caractérisé en ce que** les surfaces de réflexion du prisme rectangulaire qui forment ensemble un angle droit sont à l'opposé de la surface frontale (10).

8. Système de prismes selon la revendication 6, **caractérisé en ce que** l'une des surfaces de réflexion du prisme rectangulaire forme un angle droit avec la zone de la surface frontale (10) dirigée vers la surface de base (9) du prisme triangulaire (6).

9. Système de prismes selon la revendication 1, **caractérisé en ce que** la surface de traversée du rayon du prisme à réflexion (7) forme le côté entrée du trajet de rayon d'observation.
